# EUROPEAN PATENT APPLICATION

(11) **EP 3 836 751 A1**
(43) Date of publication of application: **16.06.2021**
(21) Application number: 19860700.4
(22) Date of filing: 18.07.2019
(51) Int. Cl.: H05B 3/56, B29C 64/112, B29C 64/245, B29C 65/34, B33Y 10/00, B33Y 80/00

(54) **JOINING HEATING CIRCUIT, JOINT, METHOD FOR MANUFACTURING JOINING HEATING CIRCUIT, AND JOINING METHOD**

(30) Priority: 14.09.2018 JP 2018173029
(71) Applicant: MITSUBISHI HEAVY INDUSTRIES, LTD., Chiyoda-ku, Tokyo 100-8332 (JP)
(72) Inventor: KAMO, Sota, Tokyo 100-8332 (JP); TAKAGI, Kiyoka, Tokyo 100-8332 (JP); HORIZONO, Hideki, Tokyo 100-8332 (JP)
(74) Representative: Hoffmann Eitle
(86) International application number: PCT/JP2019/028305
(87) International publication number: WO 2020/054215

(57) **Abstract**

A resistance fusing circuit (10) disposed between members (11) to be joined includes a heating wire (21) and a plurality of projections (22) projecting from the heating wire (21) in a facing direction in which the members (11) to be joined face each other. Each length of the projections (22) in a projecting direction is not less than half a layer thickness of a fused layer obtained by the members (11) to be joined being melted. The resistance fusing circuit (10) may further include a protective film configured to cover the heating wire (21) and the projections (22), and the protective film may be made of a same material as that of the members (11) to be joined. Further, the projections (22) may be made of a material having high thermal conductivity compared to that of the heating wire (21).

## Description

### Technical Field

The present invention relates to a heating circuit for joining, a joined body, a method for manufacturing a heating circuit for joining, and a joining method.

### Background Art

As a heating circuit for joining, there has been known a resistance heating element disposed between a pair of joining members (refer to Patent Document 1, for example). The joining members are fiber-reinforced thermoplastic resin members, and the resistance heating element is energized between the pair of joining members, thereby fusing the pair of joining members.

### Citation List

### Patent Document

Patent Document 1: JP 2015-168137 A

### Summary of Invention

### Technical Problem

A heating circuit for joining, such as the resistance heating element, needs to be densely arranged since the fusing portion needs to be uniformly heated. However, when the heating circuit for joining is densely arranged, after the resin is melted, the heating circuit for joining cannot remain in place in the melted resin before curing, and thus moves, possibly coming into contact with an adjacent heating circuit for joining and causing a short circuit. Further, after fusing is complete, the heating circuit for joining remains on the fusing surfaces, which may reduce a fusing strength.

Therefore, an object of the present invention is to provide a heating circuit for joining, a joined body, a method for manufacturing a heating circuit for joining, and a joining method capable of appropriately joining members.

### Solution to Problem

A heating circuit for joining according to the present invention, in a heating circuit for joining disposed between members, including a heating wire and a plurality of projections projecting from the heating wire in a facing direction in which the members face each other.

According to this configuration, the projections serve as resistors against the members having fluidity before curing and thus the heating circuit for joining is less likely to flow, making it possible to suppress the occurrence of a short-circuit caused by contact between circuits. Further, because the projections cut into the members before curing, a bonding strength between the members can be improved. Note that, the projecting direction of the projections in the facing direction is, for example, a direction orthogonal to the fusing surfaces where the members melt, but need not necessarily be orthogonal, and may be a direction that includes a component in a direction orthogonal to the fusing surfaces. Further, a length of each of the plurality of projections in the projecting direction may be the same or may be different.

Further, each length of the plurality of projections in the projecting direction is preferably not less than half a layer thickness of a fused layer obtained by the members being melted.

According to this configuration, when the members are melted, the projections can be made to suitably cut into the fused layer, making it possible to suitably suppress the flow of a resistance fusing circuit and suitably fuse the members together.

Further, each of the plurality of projections is preferably a material having high thermal conductivity compared to the thermal conductivity of the heating wire.

According to this configuration, the members coming into contact with the projections can be appropriately melted.

Further, an interval between adjacent projections of the plurality of projections is preferably longer than each length of the plurality of projections in the projecting direction.

According to this configuration, even if the projections are inclined, it is possible to suppress contact between the adjacent projections and therefore the occurrence of a short-circuit caused by contact between the projections.

Further, the heating circuit for joining preferably further includes a film covering the heating wire and the plurality of projections. The film is made of a same material as the members.

According to this configuration, the heating wire and the projections can be arranged between the members while being protected by the film. Further, because the film is made of the same material as the members, the members to be joined and the film can be appropriately integrated. Note that, for the film, for example, a thermoplastic resin is applied.

Another heating circuit for joining according to the present invention, in a heating circuit for joining disposed between members, including a heating band having a sheet shape and extending in a lengthwise direction. The heating band is formed by being twisted with the lengthwise direction serving as an axial direction.

According to this configuration, the heating band can be imparted with a three-dimensional shape by being twisted. The heating band having a three-dimensional shape makes flow less likely for the members having fluidity before curing, making it possible to suppress the occurrence of a short-circuit caused by contact between circuits. Further, the heating band having a three-dimensional shape cuts into the melted members, making it possible to improve the bonding strength between the members.

A joined body according to the present invention includes the above-described heating circuit for joining and members provided to both sides of the heating circuit for joining with the heating circuit for joining interposed between the members.

According to this configuration, a pair of members can be joined using the heating circuit for joining, thereby forming a joined body to which the members are appropriately joined.

A method of manufacturing a heating circuit for joining according to the present invention is a method of manufacturing a heating circuit for joining configured to manufacture a heating circuit for joining disposed between members, the heating circuit for joining including a heating wire and a plurality of projections projecting from the heating wire in a facing direction in which the members face each other. The method includes a modeling step of ejecting conductive ink from an ejection head toward a modeling table and forming the heating wire and the plurality of the projections on the modeling table.

According to this configuration, the heating circuit for joining can be easily formed by forming the heating wire and the plurality of projections by the conductive ink ejected from the ejection head.

Another method of manufacturing a heating circuit for joining according to the present invention is a method of manufacturing a heating circuit for joining configured to use a base material to manufacture a heating circuit for joining disposed between members, the heating circuit for joining including a heating wire and a plurality of projections projecting from the heating wire in a facing direction in which the members face each other. The method includes a resist applying step of applying a resist to positions on the base material where the plurality of projections are to be formed, an etching step of etching the base material, the base material is applied with the resist, and a resist removal step of removing the resist applied to the base material after etching, and forming the heating circuit for joining.

According to this configuration, it is possible to accurately form the shapes of the heating wire and the plurality of projections.

Another method of manufacturing a heating circuit for joining according to the present invention is a method of manufacturing a heating circuit for joining configured to use a base material to manufacture a heating circuit for joining disposed between members, the heating circuit for joining including a heating wire and a plurality of projections projecting from the heating wire in a facing direction in which the members face each other. The method includes a punching step of forming, in the base material, by using punch rollers with the base material interposed between the punch rollers, a cutout portion for cutting out the heating wire and a non-cutout portion without formation of a cutout at positions where the plurality of projections are to be formed and, when the heating wire is to be separated from the base material, tearing away the non-cutout portion to cause the plurality of projections to project from the heating wire with the plurality of projections in the facing direction.

According to this configuration, the heating wire is separated from the base material, making it possible to cause the plurality of projections to project in the facing direction, and thus easily form the heating circuit for joining.

A joining method according to the present invention is a joining method configured to arrange a heating circuit for joining between members and join the members. The method includes a circuit forming step of arranging, on one of the members, a plurality of heating wires provided with a plurality of projections projecting in a facing direction in which the members face each other, and connecting the plurality of heating wires to each other by an electrically conductive member and forming a heating circuit for joining, an arranging step of arranging the other of the members on the heating circuit for joining being formed, to position the heating circuit for joining between the members, and a joining step of energizing the heating circuit for joining, and joining the members.

According to this configuration, after the heating circuit for joining is formed on one of the members, the members can be joined. Note that the heating circuit for joining is connected by an electrically conductive member, and thus the plurality of heating wires form a series or parallel circuit.

Further, another joining method according to the present invention is a joining method configured to arrange a heating circuit for joining between members and join the members. The method includes a circuit forming step of arranging, on one of the members, a heating wire provided with a plurality of projections projecting in a facing direction in which the members face each other, while heating the heating wire, causing the heating wire to form a predetermined circuit pattern, and forming the heating circuit for joining, an arranging step of arranging the other of the members on the heating circuit for joining being formed, to position the heating circuit for joining between the members, and a joining step of energizing the heating circuit for joining, and joining the members.

According to this configuration, the heating wire is arranged on one of the members while heating the heating wire and the projections, thereby making it possible to make the projection appropriately cut into the members. Therefore, the heating circuit for joining formed on the member can appropriately join the members.

Further, another joining method according to the present invention is a joining method configured to arrange a heating circuit for joining between members and join the members. The method includes a heating wire arrangement step of arranging a heating wire on one of the members causing the heating wire to form a predetermined circuit pattern, a circuit forming step of arranging, on the heating wire, a plurality of projections projecting from the heating wire in a facing direction in which the members face each other while heating the plurality of projections, and forming a heating circuit for joining, an arranging step of arranging the other of the members on the heating circuit for joining being formed, to position the heating circuit for joining between the members, and a joining step of energizing the heating circuit for joining, and joining the members.

According to this configuration, the heating circuit for joining is formed on the member while heating the projections, thereby making it possible to make the projections appropriately cut into the members. Therefore, the heating circuit for joining formed on the member can appropriately join the members.

Further, another joining method according to the present invention is a joining method configured to arrange a heating circuit for joining between members and join the members. The method includes a circuit forming step of adhering a conductive material on one of the members, arranging, on the one member, a heating wire provided with a plurality of projections projecting in a facing direction in which the members face each other, and forming a heating circuit for joining, an arranging step of arranging the other of the members on the heating circuit for joining being formed, to position the heating circuit for joining between the members, and a joining step of energizing the heating circuit for joining, and joining the members. The circuit forming step includes forming a first area where thickness of the conductive material in the facing direction is thin and a second area where the thickness is thick compared to the first area, the second area being formed as the plurality of projections.

According to this configuration, the thickness of the conductive material is increased, thereby making it possible to form the plurality of projections. Further, the conductive material is adhered to form the plurality of projections on the heating wire, thereby making it possible for the heating circuit for joining formed on the member to appropriately join the members.

### Brief Description of Drawings

FIG. 1 is a cross-sectional view schematically illustrating a joined body according to a first embodiment.
FIG. 2 is a schematic view of a resistance fusing circuit according to a first embodiment.
FIG. 3 is an explanatory view of an example related to a method of manufacturing the resistance fusing circuit according to the first embodiment.
FIG. 4 is an explanatory view of an example related to the method of manufacturing the resistance fusing circuit according to the first embodiment.
FIG. 5 is an explanatory view of an example related to the method of manufacturing the resistance fusing circuit according to the first embodiment.
FIG. 6 is a plan view schematically illustrating the resistance fusing circuit formed by the method of manufacturing the resistance fusing circuit according to the first embodiment.
FIG. 7 is a schematic view of a resistance fusing circuit according to a second embodiment.
FIG. 8 is an explanatory view related to a joining method using a resistance fusing circuit according to a third embodiment.
FIG. 9 is an explanatory view related to a joining method using a resistance fusing circuit according to a fourth embodiment.
FIG. 10 is an explanatory view related to a joining method using a resistance fusing circuit according to a fifth embodiment.
FIG. 11 is an explanatory view related to a joining method using a resistance fusing circuit according to the sixth embodiment.
FIG. 12 is an explanatory view related to a joining method using a resistance fusing circuit according to a seventh embodiment.

### Description of Embodiments

Detailed descriptions will be given below of embodiments according to the present invention on the basis of the drawings. Note that, the invention is not limited to the embodiments. Further, the constituent elements in the following embodiments include those that can be easily replaced by a person skilled in the art or those that are substantially the same. Further, the constituent elements described below can be combined as appropriate, and in case of a plurality of embodiments, the embodiments can be combined with one another.

### First Embodiment

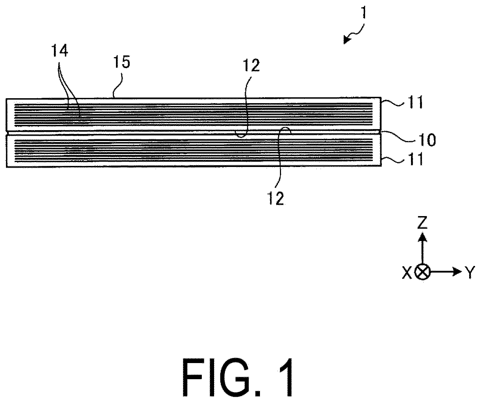

A heating circuit for joining according to a first embodiment is a heating body used for fusing members 11 to be joined together, and is a so-called resistance fusing circuit 10. First, a joined body 1 formed using the resistance fusing circuit 10 will be described with reference to FIG. 1.

FIG. 1 is a cross-sectional view schematically illustrating a joined body according to the first embodiment. As illustrated in FIG. 1, the joined body 1 is configured to include the resistance fusing circuit 10 and two of the members 11 to be joined provided to both sides of the resistance fusing circuit 10 with the resistance fusing circuit 10 interposed therebetween. Here, a thickness direction of the resistance fusing circuit 10 and the members 11 to be joined is defined as a Z direction, a predetermined direction orthogonal to the thickness direction is defined as an X direction, and a direction orthogonal to the Z direction and the X direction is defined as a Y direction.

The resistance fusing circuit 10 is a circuit of a thin film that extends along fusing surfaces 12 of the members 11 to be joined. The members 11 to be joined are each, for example, a composite material in which carbon fiber 14 is impregnated with a thermoplastic resin 15, i.e., a so-called carbon fiber reinforced thermoplastic (CFRTP). Note that while, in the first embodiment, description is made by applying the present invention to CFRTP, the member used may be any member as long as the member contains a resin that melts by being heated, and is not particularly limited. Further, while, in the first embodiment, description is made by applying the present invention to the members 11 to be joined containing a resin that melts by being heated, the present invention may be applied to members to be joined containing a thermosetting resin, or may be applied to a composite material obtained by impregnating reinforcing fibers such as carbon fibers with a thermosetting resin, for example. In this case, the heating circuit for joining is a heating circuit used to thermally cure the members to be joined. That is, the heating circuit for joining may join the members 11 to be joined by heating and thermally curing the members to be joined (composite materials) in a semicured state. Note that, in addition to the composite material described above, the members to be joined containing a thermosetting resin may be adhesive sheets composed of a thermosetting resin to be disposed between members.

When such a joined body 1 is formed, first, the resistance fusing circuit 10 is disposed between the fusing surfaces 12 of the two members 11 to be joined, thereby superimposing the members 11 to be joined and the resistance fusing circuit 10 in the Z direction. Subsequently, the resistance fusing circuit 10 is energized, causing the resistance fusing circuit 10 to generate heat. When the resistance fusing circuit 10 generates heat, the fusing surfaces 12 of the members 11 to be joined melt and, as a result, the members 11 to be joined are integrated with the resistance fusing circuit 10. Then, the members 11 to be joined are joined by cooling to form the joined body 1.

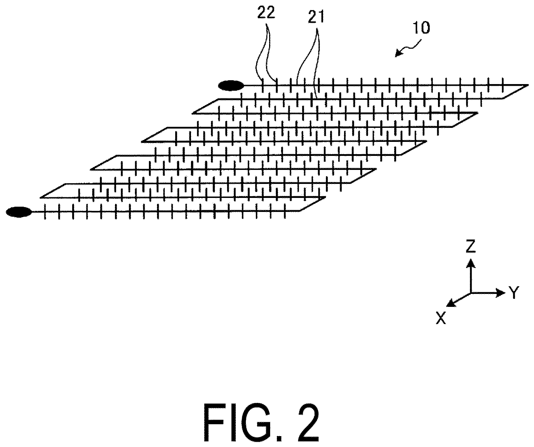

Next, the resistance fusing circuit 10 will be described with reference to FIG. 2. FIG. 2 is a schematic diagram of the resistance fusing circuit according to the first embodiment. The resistance fusing circuit 10 includes a heating wire 21 and a plurality of projections 22 projecting from the heating wire.

The heating wire 21 is a metal wire that generates heat by being energized, and forms a predetermined wire pattern in the XY plane. In FIG. 2, the heating wire 21 forms, for example, a wire pattern that zigzags in the X direction while reciprocating in the Y direction, and is formed into a substantially rectangular shape in the XY plane. Note that the wire pattern is not particularly limited. Further, a wire diameter of the heating wire 21 is a diameter that is suitable in accordance with melting conditions and the like of the members 11 to be joined and, similarly, an interval between the heating wires 21 adjacent to each other is an interval that is suitable in accordance with the melting conditions and the like of the members 11 to be joined.

The plurality of projections 22 are formed projecting from the heating wire 21 in a facing direction in which the members 11 to be joined face each other, that is, in the Z direction. Note that, the projecting direction of the projections 22 in the Z direction is, for example, a direction orthogonal to the fusing surfaces 12 where the members 11 to be joined melt, but need not necessarily be orthogonal, and may be a direction that includes a component in a direction orthogonal to the fusing surfaces 12. Further, the projections 22 may have a wedge shape that tapers toward a tip end in the projecting direction, or may have an inverted triangular shape in which a retainer extending toward the tip end in the projecting direction is formed, and is not particularly limited.

Each length of the projections 22 in the projecting direction is not less than half a layer thickness of a fused layer obtained by the members 11 to be joined being melted. Here, the fused layer is a layer obtained by the members 11 to be joined being melted by the resistance fusing circuit 10 and having a thickness in the Z direction, and is, for example, a layer from the fusing surface 12 to the carbon fiber. Further, each length in the projecting direction of the projections 22 is short compared to the interval between the projections 22 adjacent to each other on the heating wire 21. In other words, the interval between the projections 22 adjacent to each other on the heating wire 21 is longer than each length of the projections 22 in the projecting direction. Further, each length of the plurality of projections 22 in the projecting direction may be the same or may be different.

Further, the projections 22 may be configured using the same material as that of the heating wire 21, or may be configured using a different material. When a different material is used, the projections 22 use a material having higher thermal conductivity than the heating wire 21. Therefore, when the resistance fusing circuit 10 is energized, the heat generated by the heating wire 21 can be efficiently transferred to the projections 22.

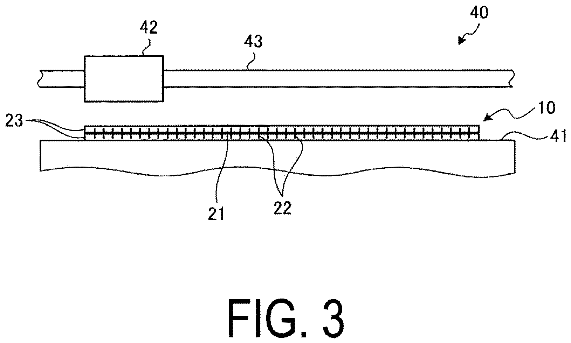

Further, the resistance fusing circuit 10 may further include a protective film 23 (refer to FIG. 3) covering the heating wire 21 and the projections 22. In this case, by using the same material as the resin contained in the members 11 to be joined, it is possible to use the protective film 23 while still in the attached state when the resistance fusing circuit 10 is energized. Note that the protective film 23 may be a material different from the resin contained in the members 11 to be joined. In this case, the protective film 23 may be used while still in the attached state or the protective film 23 may be peeled off when the resistance fusing circuit 10 is energized. For example, when the resin contained in the members 11 to be joined is a thermoplastic resin, that is, when the members 11 to be joined are made of a thermoplastic composite and a film-like adhesive composed of a thermosetting resin is used as the protective film 23, the protective film 23 may be used while still in the attached state, thereby integrating the members 11 to be joined and the protective film 23.

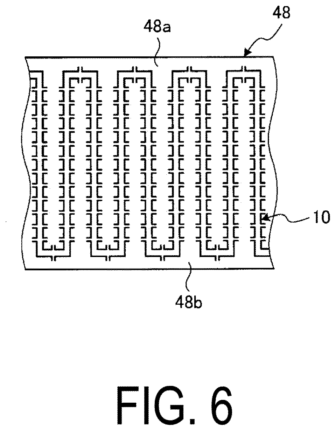

Next, an example of processing related to the method of manufacturing the resistance fusing circuit 10 will be described with reference to FIG. 3 to FIG. 6. FIG. 3 to FIG. 5 are explanatory views of an example related to the method of manufacturing the resistance fusing circuit according to the first embodiment. FIG. 6 is a plan view schematically illustrating the resistance fusing circuit formed by the method of manufacturing the resistance fusing circuit according to the first embodiment.

In FIG. 3, the resistance fusing circuit 10 is formed using a modeling device 40 capable of ejecting conductive ink from an ink-jet head 42 and carrying out three-dimensional modeling. The modeling device 40 includes a modeling table 41, the ink-jet head 42, and a guide bar 43 that guides movement of the ink-jet head 42 in a scanning direction.

Atop surface of the modeling table 41 facing the ink-jet head 42 is a flat surface, and ink droplets ejected from the ink-jet head 42 are adhered thereto. The resistance fusing circuit 10 is formed on the modeling table 41.

The ink-jet head 42 ejects conductive ink and a resin ink containing a thermoplastic resin while being guided in the scanning direction by the guide bar 43. The ink-jet head 42 ejects the conductive ink and the resin ink to form a unit layer and layer the unit layers in the Z direction, and forms the resistance fusing circuit 10.

In FIG. 3, the resistance fusing circuit 10 is formed using the above-described modeling device 40. Here, in FIG. 3, a case of forming the resistance fusing circuit 10 with the protective film 23 attached will be described as an example. Specifically, the modeling device 40 uses unit layer data, which is data obtained by dividing the resistance fusing circuit 10 with the protective film 23 attached on a per unit layer basis in the Z direction. On the basis of this unit layer data, the modeling device 40 executes a modeling step of ejecting the conductive ink and the resin ink from the ink-jet head 42 onto the modeling table 41, and layering a plurality of the unit layers in order from a lower layer, thereby forming the resistance fusing circuit 10 composed of the plurality of projections 22 and the protective film 23. Note that, while, in the modeling step illustrated in FIG. 3, the heating wire 21 and the plurality of projections 22 are formed using the conductive ink, the plurality of projections 22 may be formed by arranging the heating wire 21 prepared in advance on the modeling table 41 and ejecting the conductive ink onto this heating wire 21. At this time, the plurality of projections 22 thus formed may be made of a material having different physical properties from those of the heating wire 21. Specifically, the physical properties of the projections 22 include a high coefficient of thermal conductivity compared to that of the heating wire 21, a high hardness compared to that of the heating wire 21, a high electrical conductivity compared to that of the heating wire 21, and the like.

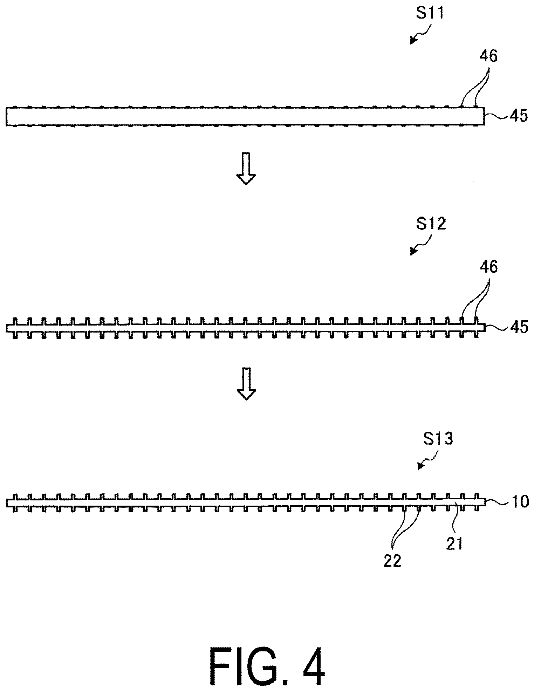

Next, in FIG. 4, etching is performed to form the resistance fusing circuit 10. Here, in FIG. 4, a case of forming the resistance fusing circuit 10 without the protective film 23 will be described as an example. First, a resist 46 is applied to a base material 45, which is in a state before becoming the resistance fusing circuit 10, at positions where the plurality of projections 22 are to be formed (step S11: resist applying step). Subsequently, the base material 45 with the resist 46 applied thereto is subjected to an etching process (step S12: etching step). In the etching step, wet etching using an etching solution may be performed, or dry etching using an etching gas may be performed, and the etching is not particularly limited. Then, the resist 46 applied to the base material 45 after etching is removed (step S13: resist removal step) to form the resistance fusing circuit 10.

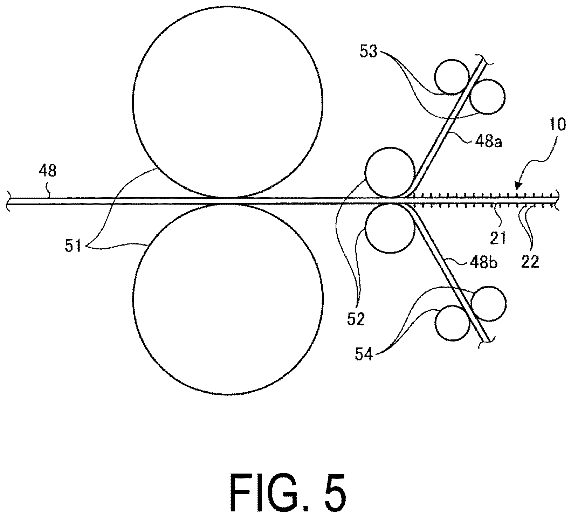

Next, in FIG. 5 and FIG. 6, the resistance fusing circuit 10 is formed using a pair of punch rollers 51. The pair of punch rollers 51 execute a punching process of punching a groove for forming the resistance fusing circuit 10 into a base material 48, which is in a state before becoming the resistance fusing circuit 10. The base material 48 with the groove punched therein by the pair of punch rollers 51 is, as an example, as illustrated in FIG. 6, and is divided into a portion constituting the resistance fusing circuit 10 and a pair of areas 48a and 48b provided to both sides of the resistance fusing circuit 10 with the resistance fusing circuit 10 interposed therebetween and to be peeled from the resistance fusing circuit 10. At this time, a cutout portion for cutting out the heating wire 21 is formed in the base material 48, while a cutout portion is not formed at positions where the projections 22 are to be formed (non-cutout portion).

Of the base material 48 punched by the pair of punch rollers 51, the area 48a is guided toward a front surface side (upper side in FIG. 6) of the base material 48, and the area 48b is guided toward a back surface side (lower side in FIG. 6) of the base material 48, by a pair of guide rollers 52 provided on a downstream side in a transport direction. The area 48a that passes through the guide rollers 52 is transported by a transport roller 53 provided on the downstream side in the transport direction, and is thereby peeled from the base material 48. Similarly, the area 48b that passes through the guide rollers 52 is transported by a transport roller 54 provided on the downstream side in the transport direction, and is thereby peeled from the base material 48. Then, the pair of areas 48a and 48b are peeled from the base material 48, thereby forming the resistance fusing circuit 10. At this time, when the heating wire 21 is separated from the base material 48, the non-cutout portion is torn away, thereby causing the projections 22 to project.

As described above, according to the first embodiment, when the members 11 to be joined are joined, the projections 22 serve as resistors against the members 11 to be joined thus melted, and thus the resistance fusing circuit 10 is less likely to flow, making it possible to suppress the occurrence of a short-circuit caused by contact between circuits. Further, because the projections 22 cut into the melted members 11 to be joined, a fusing strength (bonding strength) between the members 11 to be joined can be improved.

Further, according to the first embodiment, each length of the projections 22 is set to a length not less than half the layer thickness of the fused layer, and thus the projections 22 can suitably cut into the fused layer, making it possible to suitably suppress the flow of the resistance fusing circuit 10 and suitably fuse the members 11 to be joined.

Further, according to the first embodiment, the projections 22 are made using a material having high thermal conductivity compared to the heating wire 21, making it possible to appropriately melt the members 11 to be joined that come into contact with the projections 22.

Further, according to the first embodiment, the interval between the projections 22 adjacent to each other is made longer than each length of the projections 22 in the projecting direction, even if the projections 22 are inclined, making it possible to suppress contact between the adjacent projections 22 and therefore the occurrence of a short-circuit caused by contact between the projections 22.

Further, according to the first embodiment, due to the protective film 23, the heating wire 21 and the projections 22 can be handled in a protected state, and therefore damage to the projections 22 can be alleviated.

Further, according to the first embodiment, the heating wire 21 and the plurality of projections 22 are formed by the conductive ink ejected from the ink-jet head 42, making it possible to easily form the resistance fusing circuit 10.

Further, according to the first embodiment, the resistance fusing circuit 10 is formed by etching, making it possible to form the shapes of the heating wire 21 and the plurality of projections 22 with high accuracy.

Further, according to the first embodiment, the groove (cutout portion) is formed in the base material 48 by the punch roller 51 and the heating wire 21 is separated from the base material 48, making it possible to cause the plurality of projections 22 to project, and thus easily form the resistance fusing circuit 10.

### Second Embodiment

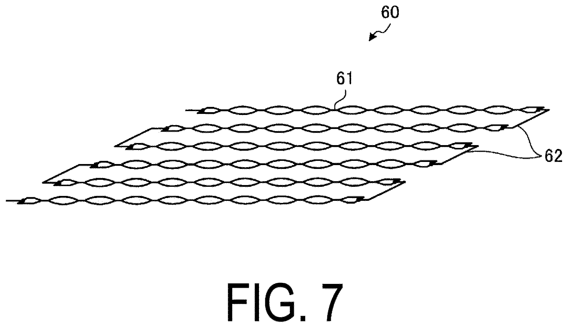

Next, a resistance fusing circuit 60 according to a second embodiment will be described with reference to FIG. 7. In the second embodiment, in order to avoid redundant descriptions, descriptions will be given only for structural elements different from those of the first embodiment, and the same reference numerals will be assigned to structural elements having the same configuration as that of the first embodiment. FIG. 7 is a schematic view of the resistance fusing circuit according to the second embodiment.

The resistance fusing circuit 60 of the second embodiment includes a heating band 61 and an electrically conductive member 62. The heating band 61 is formed in a sheet shape extending in the lengthwise direction, and is formed in a three-dimensional shape by being twisted with the lengthwise direction serving as an axial direction. The electrically conductive member 62 connects end portions of the heating band 61, forming a series or parallel circuit from a plurality of the heating bands 61. Note that, in FIG. 7, the plurality of heating bands 61 are connected by the electrically conductive member 62, forming a series circuit.

When the resistance fusing circuit 60 illustrated in FIG. 7 is manufactured, as an example, the resistance fusing circuit 60 is formed by cutting the heating band 61 having a sheet shape while twisting the heating band 61 with the lengthwise direction serving as the axial direction, arranging side-by-side a plurality of the heating bands 61 thus cut and having a spiral shape, and connecting the heating bands 62 by the electrically conductive members 62.

As described above, according to the second embodiment, by twisting the heating band 61, it is possible to impart the heating band 61 with a three-dimensional shape. The heating band 61 having a three-dimensional shape makes flow less likely with respect to the melted members 11 to be joined, making it possible to suppress the occurrence of a short-circuit caused by contact between circuits. Further, the heating band 61 having a three-dimensional shape cuts into the melted members 11 to be joined, making it possible to improve the fusing strength between the members 11 to be joined.

### Third Embodiment

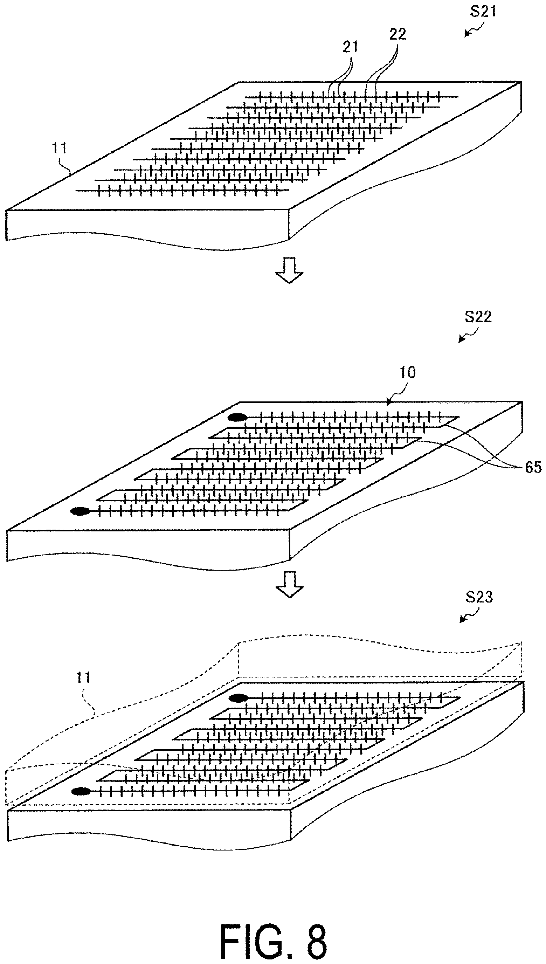

Next, a joining method using a resistance fusing circuit according to a third embodiment will be described with reference to FIG. 8. Note that, in the third embodiment, in order to avoid redundant descriptions, descriptions will be given only for structural elements different from those of the first and second embodiments, and the same reference numerals will be assigned to structural elements having the same configurations as those of the first and second embodiments. FIG. 8 is an explanatory view related to the joining method using the resistance fusing circuit according to the third embodiment.

In the joining method according to the third embodiment, the resistance fusing circuit 10 is formed when the members 11 to be joined are joined. Note that, for the resistance fusing circuit 10 used in the joining method according to the third embodiment, the heating wire 21 on which projections 22 are formed and an electrically conductive member 65 are prepared separately. Note that the heating wire 21 and the projections 22 have the same configurations as those of the first embodiment, and thus descriptions thereof will be omitted.

As illustrated in FIG. 8, first, a plurality of the heating wires 21 are disposed on (the fusing surface 12) of one of the members 11 to be joined. At this time, the heating wires 21 are arranged with the projecting direction of the projections 22 of the heating wires 21 in the Z direction (step S21). Subsequently, the heating wires 21 are connected to each other by the electrically conductive members 65 to form the resistance fusing circuit 10 (step S22: circuit formation step). Next, the other member 11 to be joined is arranged on the resistance fusing circuit 10 thus formed, thereby positioning the resistance fusing circuit 10 between the members 11 to be joined (step S23: arrangement step). Then, the resistance fusing circuit 10 is energized to melt the members 11 to be joined (step S23: melting step), thereby joining the members 11 to be joined together with the resistance fusing circuit 10.

As described above, according to the third embodiment, it is possible to form the resistance fusing circuit 10 on the member 11 to be joined, and subsequently join the members 11 to be joined.

### Fourth Embodiment

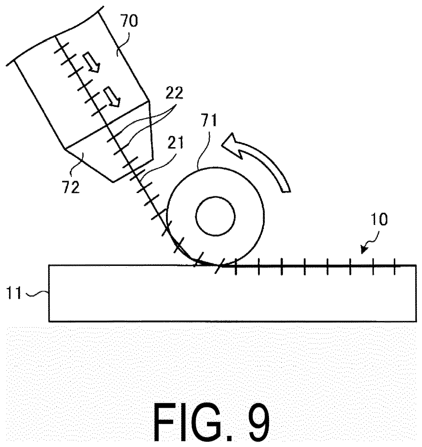

Next, a joining method using a resistance fusing circuit according to a fourth embodiment will be described with reference to FIG. 9. Note that, in the fourth embodiment as well, in order to avoid redundant descriptions, descriptions will be given only for structural elements different from those of the first to third embodiments, and the same reference numerals will be assigned to structural elements having the same configurations as those of the first to third embodiments. FIG. 9 is an explanatory view related to the joining method using the resistance fusing circuit according to the fourth embodiment.

In the joining method according to the fourth embodiment, similar to the third embodiment, the resistance fusing circuit 10 is formed when the members 11 to be joined are joined. In the joining method according to the fourth embodiment, the heating wire 21 with the projections 22 formed thereon is arranged along a predetermined circuit pattern while being fed out, thereby forming the resistance fusing circuit 10. Note that the heating wire 21 and the projections 22 have the same configurations as those of the first embodiment, and thus descriptions thereof will be omitted.

As illustrated in FIG. 9, in the joining method according to the fourth embodiment, a feeding unit 70 configured to feed the heating wire 21, and a pressing roller 71 configured to press the heating wire 21 fed out from the feeding unit 70 onto (the fusing surface 12 of) one of the members 11 to be joined are used.

A heater 72 is provided to the feeding unit 70, and the heating wire 21 and the projections 22 thus fed are heated by the heater 72. The pressing roller 71 is in rolling contact with (the fusing surface 12 of) one of the members 11 to be joined and draws the heating wire 21 and the projections 22 fed out from the feeding unit 70 between the pressing roller 71 and the member 11 to be joined. Then, the pressing roller 71 presses the heating wire 21 and the projections 22 thus drawn against the member 11 to be joined. At this time, a material that does not affect the projecting shape of the projections 22 is used for an outer circumferential surface of the pressing roller 71.

In the joining method according to the fourth embodiment, when the heating wire 21 on which the projections 22 are formed is heated and fed out from the above-described feeding unit 70, the heating wire 21 thus fed advances toward the area between the pressing roller 71 and the member 11 to be joined. Then, the heated wire 21 and the projections 22 are pressed against the member 11 to be joined by the pressing roller 71, thereby causing the projections 22 to cut into the member 11 to be joined. Then, the feeding unit 70 arranges the heating wire 21 along a predetermined circuit pattern while feeding the heating wire 21, thereby forming the resistance fusing circuit 10 (circuit formation step). Next, the other member 11 to be joined is arranged on the resistance fusing circuit 10 thus formed, thereby positioning the resistance fusing circuit 10 between the members 11 to be joined (arrangement step). Then, the resistance fusing circuit 10 is energized to melt the members 11 to be joined (melting step), thereby joining the members 11 to be joined together with the resistance fusing circuit 10.

As described above, according to the fourth embodiment, the heating wire 21 is arranged on the member 11 to be joined while heating the heating wire 21 and the projections 22, making it possible for the projections 22 to appropriately cut into the members 11 to be joined. Therefore, the resistance fusing circuit 10 formed on the member 11 to be joined can appropriately join the members 11 to be joined.

### Fifth Embodiment

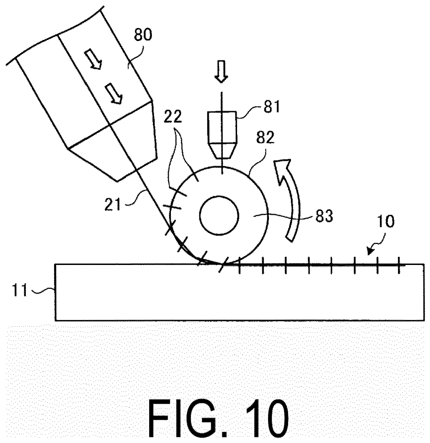

Next, a joining method using a resistance fusing circuit according to a fifth embodiment will be described with reference to FIG. 10. Note that, in the fifth embodiment as well, in order to avoid redundant descriptions, descriptions will be given only for structural elements different from those of the first to fourth embodiments, and the same reference numerals will be assigned to structural elements having the same configurations as those of the first to fourth embodiments. FIG. 10 is an explanatory view related to a joining method using the resistance fusing circuit according to the fifth embodiment.

In the joining method according to the fifth embodiment, similar to the third and fourth embodiments, the resistance fusing circuit 10 is formed when the members 11 to be joined are joined. In the joining method according to the fifth embodiment, the heating wire 21 is arranged along a predetermined circuit pattern while being fed out, and the projections 22 are arranged on the heating wire 21 thus arranged, thereby forming the resistance fusing circuit 10. Note that the heating wire 21 and the projections 22 have the same configurations as those of the first embodiment, and thus descriptions thereof will be omitted.

As illustrated in FIG. 10, in the joining method according to the fifth embodiment, a feeding unit 80 configured to feed out the heating wire 21, an injection unit 81 configured to inject the projections 22, and a pressing roller 82 configured to press the heating wire 21 fed out from the feeding unit 80 onto (the fusing surface 12 of) one of the members 11 to be joined are used.

The feeding unit 80 feeds out the heating wire 21 between the pressing roller 82 and the member 11 to be joined. The injection unit 81 continuously injects the projections 22 toward the pressing roller 82 that is rotating. Therefore, the projections 22 injected from the injection unit 81 are arranged at a predetermined interval in a circumferential direction on an outer circumferential surface of the pressing roller 82. A heater 83 is provided to the pressing roller 82, and the projections 22 side by side on the outer circumferential surface are heated by the heater 83. The pressing roller 82 is in rolling contact with (the fusing surface 12 of) one of the members 11 to be joined and, on the member 11 to be joined, the projections 22 thus heated are arranged on the heating wire 21 taken in between the pressing roller 82 and the member 11 to be joined. At this time, a material that does not affect the projecting shape of the projections 22 is used for the outer circumferential surface of the pressing roller 82.

In the joining method according to the fifth embodiment, when the heating wire 21 is fed out from the above-described feeding unit 80, the heating wire 21 thus fed advances toward the area between the pressing roller 82 and the member 11 to be joined. On the other hand, when the projections 22 are injected from the injection unit 81, the projections 22 thus injected pierce the outer circumferential surface of the pressing roller 82. Then, the heating wire 21 is pressed against the member 11 to be joined by the pressing roller 82, and the projections 22 heated by the heater 83 are arranged on the heating wire 21 by the pressing roller 82 and cut into the member 11 to be joined. Then, while feeding out the heating wire 21, the feeding unit 80 arranges the heating wire 21 along a predetermined circuit pattern (heating wire arrangement step). Further, the injection unit 81 and the pressing roller 82 arrange the projections 22 on the heating wire 21, thereby forming the resistance fusing circuit 10 (circuit formation step). Next, the other member 11 to be joined is arranged on the resistance fusing circuit 10 thus formed, thereby positioning the resistance fusing circuit 10 between the members 11 to be joined (arrangement step). Then, the resistance fusing circuit 10 is energized to melt the members 11 to be joined (melting step), thereby joining the members 11 to be joined together with the resistance fusing circuit 10.

As described above, according to the fifth embodiment, the resistance fusing circuit 10 is formed on the member 11 to be joined while heating the projections 22, making it possible for the projections 22 to appropriately cut into the members 11 to be joined. Therefore, the resistance fusing circuit 10 formed on the member 11 to be joined can appropriately join the members 11 to be joined.

### Sixth Embodiment

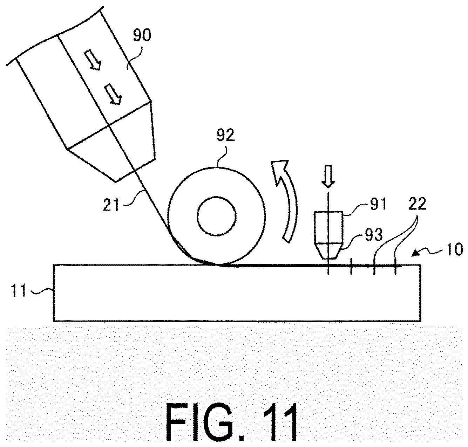

Next, a joining method using a resistance fusing circuit according to a sixth embodiment will be described with reference to FIG. 11. Note that, in the sixth embodiment as well, in order to avoid redundant descriptions, descriptions will be given only for structural elements different from those of the first to fifth embodiments, and the same reference numerals will be assigned to structural elements having the same configurations as those of the first to fifth embodiments. FIG. 11 is an explanatory view related to the joining method using the resistance fusing circuit according to the sixth embodiment.

In the joining method according to the sixth embodiment, similar to the third to fifth embodiments, the resistance fusing circuit 10 is formed when the members 11 to be joined are joined. In the joining method according to the sixth embodiment, the heating wire 21 is arranged along a predetermined circuit pattern while being fed out, and the projections 22 are arranged on the heating wire 21 thus arranged, thereby forming the resistance fusing circuit 10. Note that the heating wire 21 and the projections 22 have the same configurations as those of the first embodiment, and thus descriptions thereof will be omitted.

As illustrated in FIG. 11, in the joining method according to the sixth embodiment, a feeding unit 90 configured to feed out the heating wire 21, an injection unit 91 configured to inject the projections 22, and a pressing roller 92 configured to press the heating wire 21 fed out from the feeding unit 90 onto (the fusing surface 12 of) one of the members 11 to be joined are used.

The feeding unit 90 feeds out the heating wire 21 between the pressing roller 92 and the member 11 to be joined. The injection unit 91 injects the projections 22 toward the heating wire 21 arranged on the member 11 to be joined. A heater 93 is provided to the injection unit 91, and the projections 22 thus injected are heated by the heater 93. Therefore, the projections 22 thus injected from the injection unit 91 and heated are arranged on the heating wire 21 and pierced into the member 11 to be joined. The pressing roller 92 is in rolling contact with (the fusing surface 12 of) one of the members 11 to be joined, and the heating wire 21 taken in between the pressing roller 82 and the member 11 to be joined is pressed onto the member 11 to be joined.

In the joining method according to the sixth embodiment, when the heating wire 21 is fed out from the above-described feeding unit 90, the heating wire 21 thus fed advances toward the area between the pressing roller 92 and the member 11 to be joined. Then, the heating wire 21 is pressed against the member 11 to be joined by the pressing roller 92, and thus arranged on the member 11 to be joined. Then, while feeding out the heating wire 21, the feeding unit 90 arranges the heating wire 21 along a predetermined circuit pattern (heating wire arrangement step). Next, when the projections 22 are injected from the injection unit 91 to the heating wire on the member 11 to be joined, the projections 22 thus injected are arranged on the heating wire 21 and cut into the member 11 to be joined, thereby forming the resistance fusing circuit 10 (circuit formation step). Next, the other member 11 to be joined is arranged on the resistance fusing circuit 10 thus formed, thereby positioning the resistance fusing circuit 10 between the members 11 to be joined (arrangement step). Then, the resistance fusing circuit 10 is energized to melt the members 11 to be joined (melting step), thereby joining the members 11 to be joined together with the resistance fusing circuit 10.

As described above, according to the sixth embodiment as well, the resistance fusing circuit 10 is formed on the member 11 to be joined while heating the projections 22, making it possible for the projections 22 to appropriately cut into the members 11 to be joined. Therefore, the resistance fusing circuit 10 formed on the member 11 to be joined can appropriately join the members 11 to be joined.

### Seventh Embodiment

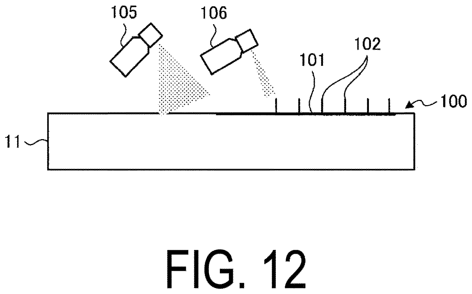

Next, a joining method using a resistance fusing circuit according to a seventh embodiment will be described with reference to FIG. 12. Note that, in the seventh embodiment as well, in order to avoid redundant descriptions, descriptions will be given only for structural elements different from those of the first to sixth embodiments, and the same reference numerals will be assigned to structural elements having the same configurations as those of the first to sixth embodiments. FIG. 12 is an explanatory view related to the joining method using the resistance fusing circuit according to the seventh embodiment.

In the joining method according to the seventh embodiment, similar to the third to sixth embodiments, the resistance fusing circuit 10 is formed when the members 11 to be joined are joined. In the joining method according to the seventh embodiment, a conductive coating (conductive material) is used to draw a heating wire 101 having a predetermined circuit pattern, and a conductive coating is used to draw the projections 102 on the heating wire 101 thus drawn to form a resistance fusing circuit 100.

The heating wire 101 is formed using, for example, a plating spray 105 that sprays the conductive coating, and is formed by a predetermined circuit pattern being drawn on the member 11 to be joined at a predetermined thickness using the conductive coating sprayed from the plating spray 105. Similar to the heating wire 101, the projections 102 are formed using a plating spray 106 that sprays a conductive coating, and is formed by being drawn in layers on the heating wire 101 of the member 11 to be joined using the conductive coating sprayed from the plating spray 106. Therefore, a first area having a thin thickness in the Z direction (facing direction) and a second area having a thick thickness compared to that of the first area are formed, and the second area is formed as the projections 22.

In the joining method according to the seventh embodiment, the conductive coating is sprayed onto the member 11 to be joined using the plating spray 105 to form the heating wire 101 having a thickness of the first area and a circuit pattern. Subsequently, the conductive coating is sprayed onto the heating wire 101 formed on the member 11 to be joined using the plating spray 106, and a second area having a thickness greater than that of the heating wire 101 is formed as the projections 102 to form the resistance fusing circuit 100 (circuit formation step). Next, the other member 11 to be joined is arranged on the resistance fusing circuit 100 thus formed, thereby positioning the resistance fusing circuit 100 between the members 11 to be joined (arrangement step). Then, the resistance fusing circuit 100 is energized to melt the members 11 to be joined (melting step), thereby joining the members 11 to be joined together with the resistance fusing circuit 100.

As described above, in the seventh embodiment as well, the thickness of the conductive material is increased, thereby making it possible to form the plurality of projections 102. Further, the conductive material is adhered to form the plurality of projections 102 on the heating wire 101, thereby making it possible for the resistance fusing circuit 100 formed on the member 11 to be joined to appropriately join the members 11 to be joined.

Note that while the two plating sprays 105 and 106 are respectively used to form the heating wire 101 and the projections 102, one spray may be used to form the heating wire 101 and the projections 102. That is, one spray may be used to form the first area and the second area while varying the thickness of the conductive coating that adheres to the member 11 to be joined, thereby forming the heating wire 101 on which a plurality of projections 102 are formed.

### Reference Signs List

- 1: Joined body
- 10: Resistance fusing circuit
- 11: Member to be joined
- 12: Fusing surface
- 14: Carbon fiber
- 15: Thermoplastic resin
- 21: Heating wire
- 22: Projection
- 23: Protective film
- 40: Modeling device
- 41: Modeling table
- 42: Ink-jet head
- 43: Guide bar
- 45: Base material
- 46: Resist
- 48: Base material
- 51: Punch roller
- 52: Guide roller
- 53, 54: Transport roller
- 60: Resistance fusing circuit (second embodiment)
- 61: Heating band
- 65: Electrically conductive member
- 70: Feeding unit
- 71: Pressing roller
- 72: Heater
- 80: Feeding unit
- 81: Injection unit
- 82: Pressing roller
- 83: Heater
- 90: Feeding unit
- 91: Injection unit
- 92: Pressing roller
- 93: Heater
- 100: Resistance fusing circuit
- 101: Heating wire
- 102: Projection
- 105: Plating spray
- 106: Plating spray

## Claims

1. A heating circuit for joining disposed between members, comprising:
a heating wire; and
a plurality of projections projecting from the heating wire in a facing direction in which the members face each other.

2. The heating circuit for joining according to claim 1, wherein
each length of the plurality of projections in the projecting direction is not less than half a layer thickness of a fused layer obtained by the members being melted.

3. The heating circuit for joining according to claim 1 or 2, wherein
each of the plurality of projections is a material having high thermal conductivity compared to the thermal conductivity of the heating wire.

4. The heating circuit for joining according to any one of claims 1 to 3, wherein
an interval between adjacent projections of the plurality of projections is longer than each length of the plurality of projections in the projecting direction.

5. The heating circuit for joining according to any one of claims 1 to 4, further comprising:
a film covering the heating wire and the plurality of projections, wherein
the film is made of a same material as the members.

6. A heating circuit for joining disposed between members, comprising:
a heating band having a sheet shape and extending in a lengthwise direction, wherein
the heating band is formed by being twisted with the lengthwise direction serving as an axial direction.

7. A joined body comprising:
the heating circuit for joining according to any one of claims 1 to 6; and
members provided to both sides of the heating circuit for joining with the heating circuit for joining interposed between the members.

8. A method of manufacturing a heating circuit for joining to manufacture the heating circuit for joining disposed between members, wherein
the heating circuit for joining includes a heating wire and a plurality of projections projecting from the heating wire in a facing direction in which the members face each other, the method comprising:
a modeling step of ejecting conductive ink from an ejection head toward a modeling table and forming the heating wire and the plurality of the projections on the modeling table.

9. A method of manufacturing a heating circuit for joining, using a base material, to manufacture the heating circuit for joining disposed between members, wherein
the heating circuit for joining includes a heating wire and a plurality of projections projecting from the heating wire in a facing direction in which the members face each other, the method comprising:
a resist applying step of applying a resist to positions on the base material where the plurality of projections are to be formed;
an etching step of etching the base material, the base material being applied with the resist; and
a resist removal step of removing the resist applied to the base material after etching, and forming the heating circuit for joining.

10. A method of manufacturing a heating circuit for joining, using a base material, to manufacture the heating circuit for joining disposed between members, wherein
the heating circuit for joining includes a heating wire and a plurality of projections projecting from the heating wire in a facing direction in which the members face each other, the method comprising:
a punching step of forming, in the base material, by using punch rollers with the base material interposed between the punch rollers, a cutout portion for cutting out the heating wire and a non-cutout portion without formation of a cutout at positions where the plurality of projections are to be formed and, when the heating wire is to be separated from the base material, tearing away the non-cutout portion to cause the plurality of projections to project from the heating wire with the plurality of projections in the facing direction.

11. A joining method to arrange a heating circuit for joining between members and join the members, the method comprising:
a circuit forming step of arranging, on one of the members, a plurality of heating wires provided with a plurality of projections projecting in a facing direction in which the members face each other, and connecting the plurality of heating wires to each other by an electrically conductive member, and forming a heating circuit for joining;
an arranging step of arranging the other of the members on the heating circuit for joining being formed, to position the heating circuit for joining between the members; and
a joining step of energizing the heating circuit for joining, and joining the members.

12. A joining method to arrange a heating circuit for joining between members and join the members, the method comprising:
a circuit forming step of arranging, on one of the members, a heating wire provided with a plurality of projections projecting in a facing direction in which the members face each other, while heating the heating wire, causing the heating wire to form a predetermined circuit pattern, and forming the heating circuit for joining;
an arranging step of arranging the other of the members on the heating circuit for joining being formed, to position the heating circuit for joining between the members; and
a joining step of energizing the heating circuit for joining, and joining the members.

13. A joining method to arrange a heating circuit for joining between members and join the members, the method comprising:
a heating wire arrangement step of arranging a heating wire on one of the members causing the heating wire to form a predetermined circuit pattern;
a circuit forming step of forming the heating circuit for joining by arranging on the heating wire a plurality of projections while said plurality of projections are heated, the plurality of projections projecting from the heating wire in a facing direction in which the members face each otherheating circuit for joining;
an arranging step of arranging the other of the members on the heating circuit for joining being formed, to position the heating circuit for joining between the members; and
a joining step of energizing the heating circuit for joining, and joining the members.

14. A joining method to arrange a heating circuit for joining between members and join the members, the method comprising:
a circuit forming step of adhering a conductive material on one of the members, arranging, on the one member, a heating wire provided with a plurality of projections projecting in a facing direction in which the members face each other, and forming a heating circuit for joining;
an arranging step of arranging the other of members on the heating circuit for joining being formed, to position the heating circuit for joining between the members; and
a joining step of energizing the heating circuit for joining, and joining the members, wherein
the circuit forming step including forming a first area where thickness of the conductive material in the facing direction is thin and a second area where the thickness is thick compared to the first area, the second area being formed as the plurality of projections.
